# EUROPEAN PATENT SPECIFICATION

(11) **EP 1 819 177 B1**
(45) Date of publication and mention of the grant of the patent: **19.03.2014**
(21) Application number: 05817901.1
(22) Date of filing: 02.12.2005
(51) Int. Cl.: H04L 29/06

(54) **A METHOD OF REALIZING DATA SEGMENTATION CASCADE AND RECOMBINATION AND A TRANSMITTER**
VERFAHREN ZUR DURCHFÜHRUNG EINER DATENSEGMENTIERUNGSKASKADE UND DATENREKOMBINATION SOWIE TRANSMITTER
PROCEDE DE REALISATION D'UNE CASCADE DE SEGMENTATION DE DONNEES ET DE RECOMBINAISON, ET EMETTEUR CORRESPONDANT

(30) Priority: 02.12.2004 CN 200410095578
(43) Date of publication of application: 15.08.2007
(60) Divisional application: 13184294.0
(73) Proprietor: Huawei Technologies Co., Ltd., Longgang District, Shenzhen Guangdong 518129 (CN)
(72) Inventor: DING, Yingzhe, Huawei Administration Bld., Shenzhen, Guangdong 518129 (CN)
(74) Representative: Körber, Martin Hans
(86) International application number: PCT/CN2005/002076
(87) International publication number: WO 2006/058502

(56) References cited:
- EP-A- 1 030 484
- CN-A- 1 322 424
- US-A1- 2003 169 769
- US-B2- 6 788 944
- US-B2- 6 788 944
- ANDREW S. TANENBAUM: "Computer Networks, 2nd Edition" 1989, PRENTICE-HALL INTERNATIONAL EDITIONS , XP002470111 * page 22, line 4 - line 22 * * page 468, line 9 - line 28 *

## Description

### Field of the Technology

The present invention relates to information transmission techniques, and more particular, to a method for implementing data segmentation and concatenation and reassembly and a transmitter thereof.

### Background of the Invention

Along with the development of 3^{rd} generation (3G) mobile communication technology, demands for mobile communication go beyond voice services. As a 3G communication system can provide services with a data ratio higher than that of a 2^{nd} generation(2G) system, a large number of multimedia services have emerged, such as the Video telephone, the picture downloading, and the high-rate browsing of the Internet. Some applications of such services require that multiple users to be able to receive the same data at the same time, such as video on demand, telecast, video conference, network-based education, and interactive video games.

In order to make efficient use of the resources of a mobile communication network, the concept of multicast and broadcast is introduced into the 3G mobile communications. The multicast and the broadcast are techniques for transmitting data from one source to multiple destinations. The WCDMA/GSM global standardization organization 3rd Generation Partnership Project (3GPP) has put forward a Multimedia Broadcast/Multicast Service (MBMS), which provides in the mobile communication network a point-to-multipoint service from one data source to multiple subscribers, sharing the network resources and raising the utility rate of the network resources, especially the resources of an air interface. The MBMS defined by the 3GPP can implement not only message multicasting and broadcasting with low rate in the format of text, but also the multicasting and broadcasting of high rate multimedia services.

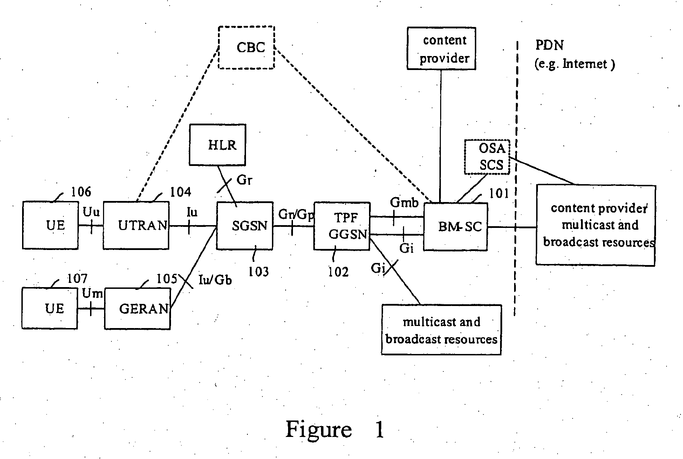

Figure 1 is a schematic diagram illustrating a structure of a radio network supporting the multicast/broadcast services. As shown in Figure 1, in a 3GPP system, a radio network entity supporting the broadcast/multicast service is a Broadcast/Multicast Service Center (BM-SC) 101, which is connected with a TPF gateway, Gateway GPRS Support Node (GGSN) 102 via an interface Gmb or Gi. One BM-SC may be connected with multiple TPF GGSNs 102. The TPF GGSN 102 is connected with a Serving GPRS Support Node (SGSN) 103 via an interface Gn/Gp. One GGSN may be connected with multiple SGSNs 103. The SGSN 103 may be connected via an interface Iu with a UMTS Terrestrial Radio Access Network (UTRAN) 104, which is in turn connected with a UE via an interface Uu. The SGSN may also connected via the interface Iu/Gb with a GSM Enhanced Radio Access Network (GERAN) 105, which is connected with a UE 107 via an interface Um. The GGSN and the SGSN are nodes within a Core Network (CN) of the radio network.

As can be seen from the network structure as shown in Figure 1, in order to support the MBMS, a new mobile network functional entity - Broadcast Multicast-Service Center (BM-SC) as an entrance of content providers is added to the 3G mobile communication system. The BM-SC is used for authorization and for initiating an MBMS bearer as well as transmitting the MBMS contents according to a pre-defined schedule in the mobile network. In addition, such functional entities as the UE, the UTRAN, the GERAN, the SGSN, and the GGSN, are enhanced to incorporate relevant functions of the MBMS.

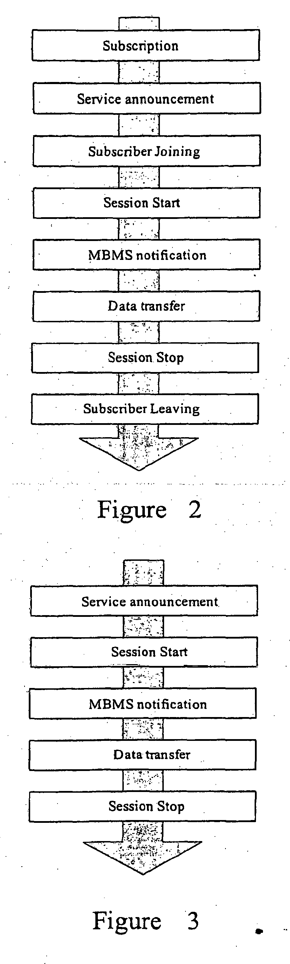

The MBMS includes a multicast mode and a broadcast mode. In the multicast mode, it is needed that a user subscribe to an appropriate multicast group, so as to activate the service, and generate corresponding billing information. As there is difference between the multicast mode and the broadcast mode in service demands, the service procedures thereof are different. As shown in Figure 2 and Figure 3, Figure 2 is a flowchart of the MBMS multicast service while Figure 3 is a flowchart of the MBMS broadcast service.

As shown in Figure 2, the procedures involved in the MBMS multicast service include: a subscription procedure, a service announcement procedure, a subscriber joining procedure, a session start procedure, a MBMS notification procedure, a data transmit procedure, a session stop procedure and a subscriber leaving procedure. The subscription procedure is used for subscribing to the needed MBMS service in advance by the users. The service announcement procedure is used for the BM-SC to announce the service that can be provided. The subscriber joining procedure, i.e., the procedure of activating the MBMS multicast service, in which the UE notifies the network that it is willing to be a member of the multicast group and receives the multicast data of the corresponding service, the subscriber joining procedure will create an MBMS UE context which records the information of the UE in the network and the UE that joins the multicast group. In the session start procedure, the BM-SC gets prepared for data transmission and instructs the network to set up bearer resources in the appropriate CN and access network. The MBMS notification procedure is used for notifying the UE that a multicast session of the MBMS is about to start. In the data transmit procedure, the BM-SC transmits the data to the UE by means of the bearer resources set up in the session start procedure. There are two modes of the MBMS data transmission between the UTRAN and the UE, a Point To Multipoint (PTM) mode and a Point To Point (PTP) mode. In the PTM mode, the same data are sent via the MBMS PTM traffic channel (MTCH), and may be received by all the UEs that have joined the multicast service or are interested in the broadcast service. While in the PTP mode, the data are sent via a dedicated traffic channel (DTCH), and can be received only by one appropriate UE. The session stop procedure is used for releasing the bearer resources set up in the session start procedure. The subscriber leaving procedure makes the subscribers within the group leave the multicast group, i.e., the users will no longer receive the multicast data, the procedure will remove the appropriate MBMS UE context.

As shown in Figure 3, the procedures involved in the MBMS broadcast service are similar to those of the MBMS multicast service except that the Subscription and the subscriber joining procedures are not needed before the session starts, and the subscriber Leaving procedure is not needed after the session stops.

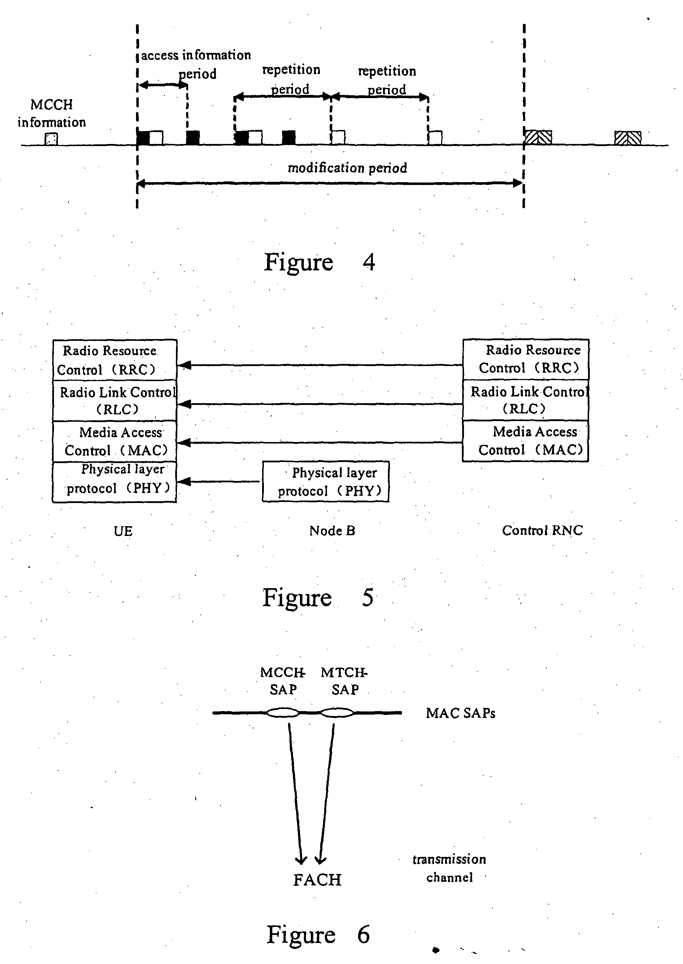

In the PTM mode of an MBMS transmission, relevant radio control information, including service information, access information, radio bearer information, and frequency-layer convergence (FLC) information, are transmitted at a Radio Resource Control (RRC) layer via a logical channel, such as an MBMS point-to-multipoint Control Channel (MCCH). MCCH information, i.e., MBMS control information, is transmitted based on a fixed dispatching mode, and in order to enhance the reliability, the UTRAN will repeat the MCCH information. Figure 4 shows the dispatch of the MCCH information transmission. As shown in Figure 4, all the squares in the figure represent the MCCH information. A period in which the MCCH information is sent repeatedly is referred to as a repetition period, and the complete MCCH information will be sent periodically in the repetition period. A modification period is an integral multiple of the repetition period. The MCCH information is modified within each modification period. The access information of the MBMS can be periodically sent in the access information period and the access information period is an integral division of the repetition period.

The MCCH information is further categorized as critical information and non-critical information. The critical information includes MBMS adjacent cell information, the MBMS service information, and the MBMS radio bearer information, and needs to be transmitted repeatedly on the periodical basis. The contents of the critical information transmitted in each repetition period remain unchanged while the contents above can be modified when being transmitted for the first time in the modification period. The non-critical information includes the access information, which need not to be transmitted repeatedly on the periodical basis and can be modified at any time. The black squares in Figure 4 represent the non-critical information, the blank squares represent the critical information, and the squares with slashes and backlashes represent, respectively, the non-critical and the critical information of which the contents have changed.

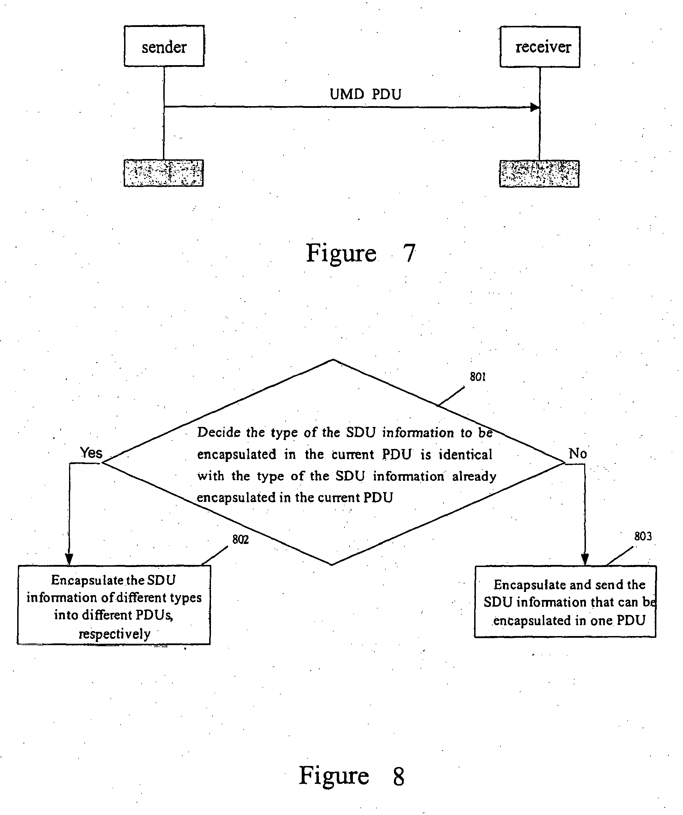

Figure 5 shows a protocol stack structure of the MCCH. As shown in Figure 5, MCCH protocol units include successively from above to below: the RRC layer, a Radio Link Control (RLC) layer, a Media Access Control (MAC) layer, and a physical (PHY) layer. Figure 6 shows a mapping relation between the logical channel of the MAC layer and a Forward Access Channel (FACH) of the PHY layer. In the systems, the MCCH information, i.e., the MBMS control information, is mapped to the FACH for transmission. The MCCH information is transmitted at the RLC layer in an unconfirmed mode (UM). The data transmission process in the UM is as shown in Figure 7. The data transmission process of the MBMS control information includes mainly a sending process of the RLC UM entity of the sender and a receiving process of the RLC UM entity of the receiver. In each transmission period, one or several Protocol Data Units (PDU) can be sent, and the size and number of the PDU are decided in the MAC within each transmission period.

According to the sending process of an Unconfirmed Mode Data Protocol Data Unit (UMD PDU), after receiving a transmission request from a higher layer for transferring the UMD, the RLC UM entity of the sender dispatches an RLC Service Data Unit (SDU) received from the higher layer to send the data. If one or multiple RLC SDUs have been dispatched for the transmission, the RLC UM entity of the sender will instruct a lower layer to receive from the higher layer the data including the number and size of the SDU. Then the RLC UM entity of the sender segments the SDU according to the size of the PDU indicated by the lower layer, concatenates the segmented SDU if possible, thereafter, sets a field of serial number as VT(US), and sets a field of LI for each SDU ending in the UMD PDU; and finally, submits the UMD PDUs of the requested number to the lower layer, i.e., the MAC layer, and updates the VT(US) for each UMD PDU submitted to the lower layer while buffering the SDUs that have not been submitted to the lower layer.

According to the process of receiving the UMD PDU, after receiving a group of UMD PDUs from the lower layer, the RLC UM entity of the receiver updates the VR(US) according to the received UMD PDUs. If the updated step of the VR(US) is not equal to 1, the RLC UM entity of the receiver discards the SDU that has segments in the lost UMD PDUs. If the updated step of the VR (US) is equal to 1, the RLC UM entity of the receiver reassembles the received UMD PDUs into an RLC SDU and submits the reassembled RLC SDU to the higher layer, i.e., the RRC layer.

The format of the UMD PDU is as shown in Table 1:

**Table 1**

| | | |
|---|---|---|
| Sequence Number | **E** | Oct1 |
| Length Indicator | E | ( Optional ) |
| ······ | | |
| Length Indicator | E | ( Optional ) |
| Data | | |
| PAD | | ( Optional ) |
| | | **Last Ocetet** |

In view of the format of the UMD PDU of the RLC protocol, a Length Indicator (LI) marks the ending position of the RLC SDU in the UMD PDU. Apart from some predefined special values, the LI indicates the number of bytes from the ending position of the RLC header in the UMD PDU to the last byte of the RLC SDU in the UMD PDU. The LI includes 7 or 15 bits. In the UM, if the size of the largest UMD PDU is <= 125 bytes, the LI of 7 bits is used, while the LI of 15 bits is used if the size of the largest UMD PDU is > 125 bytes. The meaning of each special value of 7-bit and 15-bit LI are shown in Table 2 and Table 3, respectively. Table 2 describes the meaning of each special value of 7-bit LI, and Table 3 describes the meaning of each special value of 15-bit LI.

**Table 2**

| Bit | Description |
|---|---|
| 0000000 | The previous RLC PDU is just filled in by one RLC SDU, and there is no LI in the previous RLC PDU marking the end of the SDU |
| 1111100 | UMD PDU: the first byte of the RLC PDU is the first byte of an RLC SDU; AMD PDU: reserved (in the present version, the PDU with this value is discarded) |
| 1111101 | Reserved (in the present version, the PDU with this value is discarded) |
| 1111110 | AMD PDU: the remainder of PDU includes a piggybacked STATUS PDU; UMD PDU: reserved (in the present version, the PDU with this value is discarded) |
| 1111111 | The remainder of RLC PDU includes padding bits, and the length of pudding bits can be zero |

**Table 3**

| Bit | Description |
|---|---|
| 000000000000000 | The previous RLC PDU is just filled in by one RLC SDU, and there is no LI in the previous RLC PDU marking the end of this SDU |
| 111111111111011 | The previous RLC PDU has one remaining byte after being filled with the last segment of an RLC SDU, there is no LI in the previous RLC PDU marking the end of RLC SDU, the last byte of the previous RLC PDU is ignored |
| 111111111111100 | AMD PDU: the remainder of PDU includes a piggybacked STATUS PDU; UMD PDU: reserved (in the present version, the PDU with this value is discarded) |
| 111111111111101 | Reserved (in the present version, the PDU with this value is discarded) |
| 111111111111110 | AMD PDU: the remainder of PDU includes a piggybacked STATUS PDU; UMD PDU: reserved (in the present version, the PDU with this value is discarded) |
| 111111111111111 | The remainder of RLC PDU includes padding bits, and the length of padding bits can be zero |

In the prior art, the function of transmitting the SDU out of sequence is added to the RLC. The so-called function of out-of-sequence transmission means the function capable of re-transmitting any designated PDU that has been sent already. The function of the out-of-sequence transmission is only applicable to the critical information, for the critical information sent in each repetition period has the same contents and the transmission error or lost information in the previous repetition period can be recovered using the information transmitted in the subsequent repetition period, while the non-critical information can not be transmitted out of sequence.

To be specific, in order to implement the out-of-sequence transmission in the prior art, it is required that, ① the RRC indicates to the RLC whether the provided SDU is the critical information or the non-critical information, and the RLC be not allowed to concatenate the SDU of the critical information with the SDU of the non-critical information in one RLC PDU. ② the PDU including the critical information be saved by the RLC after being sent, the serial number of the saved PDU can not be re-used, and the RRC can request re-transmission of all the saved PDUs. ③ the RRC reassemble the RLC UM entity at the start of each modification period. For the receiver, it is required that ① the RLC, whenever receiving the PDU, attempt to reassemble the associated SDUs, and if the PDU with the serial number has been saved, discard the PDU. ② the RRC reassemble the RLC UM entity at the start of each modification period.

Based on the requirements mentioned above, the major difference between the sending process of the UMD PDU after the function of the out-of-sequence transmission is implemented and that before the function of the out-of-sequence transmission is implemented is as following: the higher layer has to set a saving indicator for each SDU supporting the function of the out-of-sequence transmission, and the SDU with the saving indicator can not be concatenated with the SDU without the saving indicator in one PDU; and a decision has to be made, when the RLC UM entity of the sender submits to the lower layer the requested number of the UMD PDUs, on whether the saving indicator is included in the current PDU being handled, if included, the current PDU is saved, otherwise, the normal handling process is followed.

Correspondingly, the receiving process of the UMD PDU is as following: after receiving a group of UMD PDUs from the lower layer, the RLC UM entity of the receiver handles each UMD PDU in the order of the serial numbers, if a received UMD PDU has the same serial number as a saved UMD PDU, the received UMD PDU will be discarded; if no saved UMD PDU has the same serial number as that of the received UMD PDU, the RLC UM entity of the receiver saves the received UMD PDU in the order of the serial numbers, reassembles the received UMD PDUs into a RLC SDU, and then submits the RLC SDU to the higher layer.

In view of the sending process mentioned above, when the end of the last segment of one SDU appears at the end of one PDU and there is no LI field indicating the end of the SDU, the special value of the LI field, "0000000" or "000000000000000" or "111111111111011" is used in the first LI field of the next PDU as an end indicator of the SDU. The special value of the LI field, "0000000" or "000000000000000" or "111111111111011", is referred to as the end indicator of the SDU.

Based on the existing protocol, it is required that the last segment of one SDU be concatenated with the first segment of the next SDU so as to just fill in the data field and avoid unnecessary padding. After the function of out-of-sequence transmission is introduced, however, it is required that the SDU with the critical information can not be concatenated with the SDU with the non-critical information in one PDU. As a result, if the SDU sent previously is the SDU with the critical information while the SDU to be sent next is the SDU with the non-critical information, it has not been specified in the existing protocol whether the PDU containing the end indicator of the SDU with the critical information can contain the segment of the SDU with the non-critical information.

Since it has not been expressly specified whether the PDU containing the end indicator of the SDU with the critical information can contain the segment of the SDU with the non-critical information, it is possible that there are two implementing methods in practical applications, i.e., for the RNC devices of different manufacturers, some PDUs containing the end indicator of the SDU with the critical information may contain the segment of the SDU with the non-critical information while others may not contain the segment thereof.

When the PDU containing the end indicator of the SDU with the critical information contains the segment of the SDU with the non-critical information, it may be resulted that duplicate non-critical information is submitted to the higher layer according to the existing handling at the receiver because the PDU needs to be re-sent.

EP 1030484 A1 describes a data link layer quality of service for UMTS. The document particularly discloses checking, whether several packets belong to the same "QoS class" and are to be processed on a "QoS plane". The QoS class is obtained by mapping a QoS requirement.

### Summary of the Invention

According to embodiments of the present invention, a method for data segmentation and concatenation so as to make the receiver avoid unnecessary duplicate reassembly, thereby improve the reliability of the information transmission.

According to embodiments of the present invention, a method for data reassembly so as to make the receiver would not reassemble the data with possible errors is provided.

According to embodiments of the present invention, a transmitter that implements the method for data segmentation and concatenation so as to make the receiver avoid unnecessary duplicate reassembly is provided.

The specific solution in accordance with the method of the present invention is as follows:

A method for data segmentation and concatenation includes:
deciding, by a sender, whether the type of Service Data Unit (SDU) information to be encapsulated in a first Protocol Data Unit (PDU) is identical with the type of SDU information already encapsulated in the first PDU, if the type of the SDU information to be encapsulated in the first PDU is identical with the type of the SDU information already encapsulated in the first PDU, encapsulating, by the sender, the SDU information to be encapsulated in the first PDU for transmission; and if the type of the SDU information to be encapsulated in the first PDU is not identical with the type of the SDU information already encapsulated in the first PDU, encapsulating, by the sender, the SDU information to be encapsulated in a second PDU for transmission; wherein the type of the SDU information comprises critical information or non-critical information of MBMS control information; wherein the SDU information to be encapsulated in the first PDU is a segment of a second-type SDU; and the SDU information already encapsulated in the first PDU is an end indicator of a first-type SDU.

The SDU information includes at least one of: a segment of SDU and an end indicator of SDU.

When the type of SDU information to be encapsulated is not identical with the type of SDU information already encapsulated, the method further includes the process of:sending the first PDU containing SDU information; or sending the second PDU containing SDU information, the type of the SDU information being not identical with the type of the SDU information contained in the first PDU.

The method further includes the process of: encapsulating padding bits in the first PDU.

The end indicator of the first-type SDU is a value of a first LI field of the first PDU in which the end indicator of the first-type SDU is encapsulated.

The first PDU containing the end indicator of the first-type SDU is sent before the second PDU containing a first segment of the second-type SDU is sent; or all the PDUs containing segments of the second-type SDU are sent before the first PDU containing the end indicator of the first-type SDU is sent.

The method further includes the process of: encapsulating padding bits in the first PDU containing the end indicator of the first-type SDU; or encapsulating a segment of another first-type SDU in the first PDU containing the end indicator of the first-type SDU.

The SDU information includes SDUs that need to be re-transmitted and SDUs that need not to be re-transmitted.

The end indicator of SDU includes any one of: a special value of LI field 0000000, a special value of LI field 000000000000000, and a special value of LI field 111111111111011.

In accordance with the method for implementing data segmentation and concatenation and reassembly as well as the transmitter provided by the present invention, the sender encapsulates different types of SDUs and the related information into different PDUs for transmission; or the receiver makes special processing of the PDU including an end indicator of SDU such that it could be avoided that the receiver makes unnecessary duplicate reassembly or reassembles the data that may have errors, preventing the lower layer in the RLC UM entity from submitting to the higher layer the information that may lead to processing errors, e.g. repeatedly submitting the same access information to the higher layer, thereby improving the reliability of information transmission, and ensuring the normal processing of the data by the RLC UM entity.

The present invention provides various modes of implementation, which are flexible, convenient, and easy to put into practice. In addition, the method of the present invention is applicable not only to the transmission of MBMS information, but to all the cases where the RLC UM entity is needed to implement data transmission, i.e. the solution has a wider range of application.

### Brief Description of the Drawings

Figure 1 is a schematic diagram illustrating an exemplary structure of a radio network supporting the multicast/broadcast services;
Figure 2 is a flowchart illustrating an exemplary service process of the MBMS multicast mode;
Figure 3 is a flowchart illustrating an exemplary service process of the MBMS broadcast mode;
Figure 4 is a schematic diagram illustrating an exemplary transmission dispatch process of the MCCH information.
Figure 5 is a diagram illustrating an exemplary structure of the MCCH protocol stack;
Figure 6 is a diagram illustrating an exemplary mapping relationship between the logical channel of the MAC layer and the FACH channel of the PHY layer;
Figure 7 is a diagram illustrating an exemplary transmission mode of the MBMS control information;
Figure 8 is a flowchart illustrating a preferred process of data segmentation an concatenation at a sender in accordance with the present invention;
Figure 9 is a schematic diagram illustrating a preferred structure of an RLC UM entity in accordance with the present invention;
Figure 10 is a schematic diagram illustrating a preferred structure of a transmitter in accordance with the present invention.

### Embodiments of the Invention

According to the present invention, a sender, when conducting data segmentation and concatenation, encapsulates different types of the SDU information into different PDUs for transmission. In an alternative way, a receiver, when reassembling the data, makes a special processing of a PDU including an end indicator of the SDU, and don't conduct reassembly of the SDU segments that have been reassembled, thereby ensuring that the receiver will not conduct unnecessary duplicate reassembly.

In accordance with the embodiment of the present invention, the process of the data segmentation and concatenation at the sender is as shown in Figure 8, including step 801, step 802 and step 803.

Steps 801 - 803: the RLC UM entity of the sender decides whether the SDU information to be encapsulated into the PDU is a different type of the SDU from that of the SDU information already encapsulated into the PDU. If the SDU information to be encapsulated into the PDU is a different type of the SDU from that of the SDU information already encapsulated into the PDU, encapsulates the SDU information to be encapsulated currently into another PDU for transmission; if the SDU information to be encapsulated into the PDU is the same type as the SDU from that of the SDU information already encapsulated into the PDU, encapsulates the SDU information to be encapsulated currently into the current PDU for transmission. The SDU information includes at least a segment of the SDU, or/and the end indicator of the SDU that has just been sent.

When the SDU information already encapsulated is the end indicator of one type of SDU, and the SDU information to be encapsulated is the segment of another type of SDU, then the specific handling process is as follows: when the last segment of the one type of SDU has been sent but the end indicator of the one type of SDU has not yet been sent, decide whether another type of SDU is received, if another type of SDU is received, encapsulate one segment of the received another type of SDU into different PDU with the PDU into which the end indicator of the SDU has been encapsulated for transmission, and set the end indicator of the SDU as the value of the first LI field of the PDU to which the indicator belongs; if no another type of SDU is received, set the value of the first LI field in the next PDU immediately adjacent to the PDU to include the last segment of the current SDU as the end indicator of the SDU, and then encapsulate in order the segments of the next SDU to be sent.

The different types of SDUs may refer to the SDU of the critical information and the SDU of the non-critical information. A detailed description is hereinafter given by taking the SDU of the critical information and the SDU of the non-critical information as an example.

### Embodiment I:

In the embodiment, when the sender conducts the data segmentation and concatenation, it is not allowed to encapsulate the segments of the SDU of the non-critical information into the PDU including the end indicator of the SDU of the critical information.

When the end of the last segment of the currently sent SDU of the critical information appears just at the end of the PDU and there is no LI field indicating the end of the SDU of the critical information, the end indicator of the SDU of the critical information is encapsulated in the first LI field of the next PDU, represented by the special value of the LI field "0000000" or "000000000000000". When the length of LI field is 15 bits, it is possible that the end of the last segment of the currently sent SDU of the critical information fills one PDU with but one byte left. At this time, the end indicator of the SDU is encapsulated in the first LI field of the next PDU, represented by the special value of LI field "111111111111011". If the next SDU to be sent is the SDU of the non-critical information, the segment of the SDU of the non-critical information can not be included in the PDU that includes the end indicator of the SDU of the critical information for transmission, instead, the segment of the SDU of the non-critical information is postponed to the further next PDU for transmission earliest. The PDU including the end indicator of the SDU of the critical information may be filled with padding bits, or may be encapsulated with segments of other dispatched SDUs of the critical information to be sent.

For example, there are two SDUs of the critical information in the transmission buffer, referred to as SDU1 with the size of 120 bits and SDU2 with the size of 200 bits. The fixed size of each PDU is 128 bits, and one PDU is sent at each Transmission Time Interval (TTI). Supposing that the PDU with the serial number 10 is encapsulated with the SDU1, the length of the serial number field (SN) is 8 bits, and the length of the Data field is 120 bits. The format of the PDU with the serial number 10 is as shown in Table 4:

**Table 4**

| | |
|---|---|
| SN = '0001010' | E='0' |
| Data(120bits) | |

Since it happens that the PDU has no room for the LI field, the next PDU should be encapsulated with the LI, for example, the value of the first LI field of the PDU with the serial number of 11 should be set as "0000000". If an SDU3 of the non-critical information is going to be sent at next TTI and the size of the SDU3 is 40 bits, the next SDU to be sent according to the dispatching rule based on priority will be the SDU3 of the non-critical information after the SDU1 of the critical information has been sent, and then the SDU2 is sent. In the embodiment, the first LI field of the PDU of No. 11 is set as "0000000", and the PDU of No.11 includes no segment of the SDU3. The PDU may be encapsulated with padding bits, or with the segment of the SDU of the critical information, e.g., with the first segment of the SDU2.

When the PDU of No. 11 is encapsulated entirely with padding bits, the format thereof is as shown in Figure 5:

**Table 5**

| | |
|---|---|
| SN = '0001011' | E='1' |
| LI = '000 0000' | E='1' |
| LI = '111 1111' | E='0' |
| PAD(104bits) | |

Immediately thereafter, the PDU of No. 12 is encapsulated with the SDU3, and the format of the PDU is as shown in Table 6:

**Table 6**

| | |
|---|---|
| SN = '0001100' | E='1' |
| LI = '000 0101' | E='1' |
| LI = '111 1111' | E='0' |
| Data(40bits) | |
| PAD(64bits) | |

When the PDU of No. 11 is encapsulated with the first segment of the SDU2, the format of the PDU is as shown in Table 7:

**Table 7**

| | |
|---|---|
| SN = '0001011' | E='1' |
| LI = '000 0000' | E='0' |
| Data(12bits) | |

Immediately thereafter, the PDU of No. 12 is encapsulated with the SDU3, and the format of the PDU is as shown in Table 8:

**Table 8**

| | |
|---|---|
| SN = '0001100' | E='1' |
| LI = '000 0101' | E='1' |
| LI = '111 1111' | E='0' |
| Data(40bits) | |
| PAD(64bits) | |

### Embodiment II:

The embodiment II is basically the same as Embodiment I except that, after the SDU of the critical information is sent, if there is the SDU of the non-critical information to be sent on priority, the SDU of the non-critical information will be sent before the PDU including the end indicator of the SDU of the critical information is sent. Take the same example as in Embodiment I, immediately after the SDU1 of the critical information is sent, the SDU3 of the non-critical information is sent while the PDU including the end indicator of the SDU1 of the critical information is not sent until all the segments of the SDU3 of the non-critical information are sent.

In the case, the PDU of No.11 is encapsulated with the SDU3, the format of which is as shown in Table 9:

**Table 9**

| | |
|---|---|
| SN = '0001011' | E='1' |
| LI = '000 0101' | E='1' |
| LI = '111 1111' | E='0' |
| Data(40bits) | |
| PAD(64bits) | |

The PDU of No.12 includes the end indicator of the SDU1 and the first segment of the SDU2, of which the format is as shown in Table 10:

**Table 10**

| | |
|---|---|
| SN = '0001100' | E='1' |
| LI = '000 0000' | E='0' |
| Data(112bits) | |

Both of the embodiments mentioned above illustrates the special data segmentation and concatenation processing at the sender. After the processing at the sender, the receiver carries out normal receiving and processing of the data. The present invention further provides an embodiment that no special processing is conducted at the sender, e.g. it is allowed to encapsulate the end indicator of the SDU of the critical information with the segment of the SDU of the non-critical information into one PDU while special processing is conducted when the receiver implements reassembly so as to avoid duplicate receiving.

According to the embodiment, the receiver conducts duplicate checking for the received PDU, if the PDU includes the end indicator of the SDU and the associated SDU included in the PDU has been reassembled, no reassembly of the SDU segment included in the PDU will be conducted even that the PDU is still saved in the buffer and has not been removed so as to ensure that the reassembled SDU of the non-critical information is sent to the higher layer only once.

For example, 3 PDUs of No.6, 7, and 8 are encapsulated with all the segments of the SDU1 of the critical information, and the PDU of No. 9 is encapsulated with the end indicator of the SDU1 of the critical information and the SDU2 of the non-critical information. Under normal circumstances, the receiver will carry out reassembly to obtain the SDU1 and the SDU2 after receiving the 4 PDUs of No. 6, 7, 8, and 9 in order. However, if the receiver receives the PDUs with the serial numbers of 6, 7, and 9 firstly, and thereafter, receives the PDU corresponding to No.8, as the receiver attempts to reassemble the associated SDU whenever receiving the PDU so as to implement the function of out of sequence delivery. In accordance with the prior art, the receiver will reassemble the data into the SDU2 after receiving the 3 PDUs corresponding to the serial numbers of 6, 7, and 9 while the PDU of No.9 can not be removed from the buffer; after receiving the PDU of No.8, the receiver will reassemble the data into the SDU1 and again, the SDU2. As a result, the same non-critical information is repeatedly reassembled and repeatedly sent to the higher layer, leading to processing errors in the higher layer.

In accordance with the embodiment of the present invention, duplicate checking is carried out for each received PDU, and for the PDU including the end indicator of the SDU, such as the PDU of No.9, if the SDU in the PDU has already been reassembled, then the receiver, after receiving the PDU of No.8, will only reassemble the end indicator of the SDU in the PDU of No.9 and the segments of the SDU1 in the 3 PDUs of No.6, 7, and 8 to obtain the SDU1 while carrying out no reassembly of the SDU2. Herein, how to decide whether the associated SDU in each PDU has been reassembled is an issue that can be solved by the prior art, for example, by setting appropriate flags, thus no further description is given here.

Further, it may be required for the SDU of the non-critical information that reassembly is only conducted for the related PDU that is correctly received for the first time. If the PDU sent after the PDU including the end indicator of the SDU is sent has been received before the PDU including the end indicator of the SDU is correctly received, the PDU including the end indicator of the SDU will no longer be processed even through it is received. For example, 3 PDUs of No.6, 7, and 8 are encapsulated with all the segments of the SDU1, the PDU of No.9 is encapsulated with the end indicator of the SDU1 and the segment of the SDU2, and the PDU of No.10 is encapsulated with the segment of the SDU3. If, after the 3 PDUs of No. 6, 7, and 8 are received, the PDU of No.10 is received before the PDU of No.9 is received, no reassembly is conducted for the SDU2.

The functional entity for implementing the transmission of the PDU in the UM mode includes two corresponding portions: a transmitting UM RLC entity used for dispatching and sending the PDUs and a receiving UM RLC entity used for receiving and reassembling the PDUs. Generally, the transmitting UM RLC entity is at the UTRAN side, the receiving UM RLC entity is at the UE side, and the transmitting UM RLC entity and the receiving UM RLC entity make interaction via the radio interface Uu.

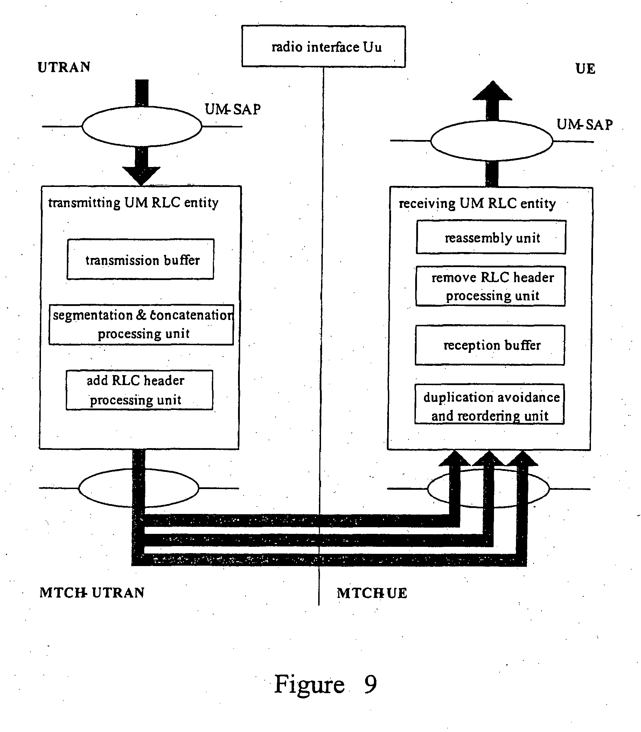

A preferred structure of the transmitting and the receiving UM RLC entities is as shown in Figure 9. The transmitting UM RLC entity includes: a transmission buffer used for saving the SDU; a segmentation and concatenation processing unit used for conducting the segmentation and concatenation for the received UMD SDU and assembling into the PDU, and for conducting padding; and an add RLC header processing unit for appending the RLC header to the PDU to be sent. The receiving UM RLC entity includes: a duplicate avoidance and reordering unit used for checking duplication and reordering the UMD PDUs; a reception buffer used for buffering the received PDUs; a remove RLC header processing unit used for removing the appended RLC header of the received PDU; a reassembly unit used for reassembling the received PDU into the SDU, and then submitting the reassembled SDU to the higher layer.

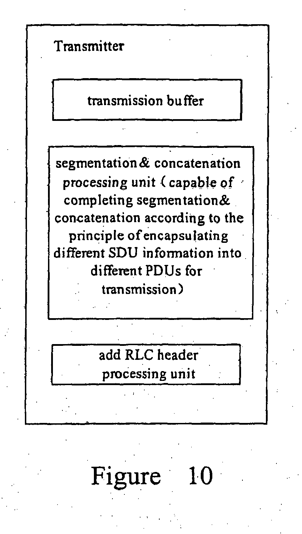

In accordance with the transmitting UM RLC entity shown in Figure 9, a transmitter is put forward. A preferred structure of the transmitter is shown in Figure 10. The transmitter includes: a transmission buffer used for saving the SDU; an add RLC header processing unit used for appending the RLC header to the PDU to be sent; a segmentation and concatenation processing unit used for conducting the segmentation and concatenation of the received SDU according to the principle of encapsulating the different types of SDU information into the different PDUs for transmission and assembling into the PDUs. The segmentation and concatenation processing unit decides whether the type of the SDU information to be encapsulated is identical with the type of the SDU information already encapsulated in the current PDU, if the type is identical, the segmentation and concatenation processing unit encapsulate the SDU information to be encapsulated in the current PDU, if the type is not identical, the segmentation and concatenation processing unit encapsulate the SDU information to be encapsulated in another PDU. The SDU information includes a segment of the SDU, or/and the end indicator of the SDU.

The solution mentioned above is applicable to such radio communication systems as the GPRS, the EDGE, the WCDMA, and the TD-SCDMA. The specification and drawings are, accordingly, to be regarded in an illustrative rather than a restrictive sense. It will, however, be evident that additions, subtractions, substitutions, and other modifications may be made without departing from the broader spirit and scope of the invention as set forth in the claims.

## Claims

1. A method for data segmentation and concatenation, **characterized by** comprising:
deciding (801), by a sender, whether the type of Service Data Unit, SDU, information to be encapsulated in a first Protocol Data Unit, PDU, is identical with the type of SDU information already encapsulated in the first PDU,
if the type of the SDU information to be encapsulated in the first PDU is identical with the type of the SDU information already encapsulated in the first PDU, encapsulating (803), by the sender, the SDU information to be encapsulated in the first PDU for transmission; and
if the type of the SDU information to be encapsulated in the first PDU is not identical with the type of the SDU information already encapsulated in the first PDU, encapsulating (802), by the sender, the SDU information to be encapsulated in a second PDU for transmission;
wherein the type of the SDU information comprises critical information or non-critical information of MBMS control information;
wherein the SDU information to be encapsulated in the first PDU is a segment of a second-type SDU; and the SDU information already encapsulated in the first PDU is an end indicator of a first-type SDU.

2. The method according to Claim 1, wherein the SDU information comprises at least one of: a segment of SDU and an end indicator of SDU.

3. The method according to Claim 1, when the type of SDU information to be encapsulated is not identical with the type of SDU information already encapsulated, further comprising:
sending the first PDU containing SDU information; or sending the second PDU containing SDU information, the type of the SDU information being not identical with the type of the SDU information contained in the first PDU.

4. The method according to Claim 1, further comprising: encapsulating padding bits in the first PDU.

5. The method according to claim 1, wherein the end indicator of the first-type SDU is a value of a first LI field of the first PDU in which the end indicator of the first-type SDU is encapsulated.

6. The method according to claim 1, wherein the first PDU containing the end indicator of the first-type SDU is sent before the second PDU containing a first segment of the second-type SDU is sent; or all the PDUs containing segments of the second-type SDU are sent before the first PDU containing the end indicator of the first-type SDU is sent.

7. The method according to claim 1, further comprising: encapsulating padding bits in the first PDU containing the end indicator of the first-type SDU; or encapsulating a segment of another first-type SDU in the first PDU containing the end indicator of the first-type SDU.

8. The method according to any one of claims 1 to 7, wherein the SDU information comprises SDUs that need to be re-transmitted and SDUs that do not need to be re-transmitted.

9. The method according to claim 1, 2, 5, 6 or 7, wherein the end indicator of SDU comprises any one of: a special value of LI field 0000000, a special value of LI field 000000000000000, and a special value of LI field 111111111111011.

## Patentansprüche

1. Verfahren zum Segmentieren und Verketten von Daten, **dadurch gekennzeichnet, dass** es umfasst:
Entscheiden (801), mithilfe eines Absenders, ob die Art von Dienstdateneinheit-Informationen (DDE-Informationen), die in einer ersten Protokolldateneinheit (PDE) eingekapselt werden sollen, identisch mit der Art von DDE-Informationen ist, die bereits in der ersten PDE eingekapselt sind,
wenn die Art der DDE-Informationen, die in der ersten PDE eingekapselt werden sollen, identisch mit der Art der bereits in der ersten PDE eingekapselten DDE-Informationen ist, Einkapseln (803) der in der ersten PDE einzukapselnden DDE-Informationen mithilfe des Absenders, um sie zu senden, und wenn die Art der DDE-Informationen, die in der ersten PDE eingekapselt werden sollen, nicht identisch mit der Art der bereits in der ersten PDE eingekapselten DDE-Informationen ist, Einkapseln (802) der in einer zweiten PDE einzukapselnden Information mithilfe des Absenders, um sie zu senden,
wobei es sich bei der Art der DDE-Informationen um entscheidende oder nicht entscheidende Informationen aus MBMS-Steuerungsinformationen handelt,
wobei die in der ersten PDE einzukapselnden DDE-Informationen ein Segment einer DDE der zweiten Art sind, und die bereits in der ersten PDE eingekapselten DDE-Informationen ein Endanzeiger einer DDE der ersten Art sind.

2. Verfahren nach Anspruch 1,
wobei die DDE-Informationen mindestens eine aus einem Segment einer DDE und einem Endanzeiger einer DDE umfassen.

3. Verfahren nach Anspruch 1,
wobei die Art der einzukapselnden DDE-Informationen nicht identisch mit der Art der bereits eingekapselten DDE-Informationen ist, wobei das Verfahren außerdem umfasst:
Senden der ersten PDE, die DDE-Informationen enthält, oder Senden der zweiten PDE, die DDE-Informationen enthält, wobei die Art der DDE-Informationen nicht identisch mit der Art der in der ersten PDE enthaltenen DDE-Informationen ist.

4. Verfahren nach Anspruch 1,
das außerdem umfasst: Einkapseln von Füllbits in der ersten PDE.

5. Verfahren nach Anspruch 1,
wobei der Endanzeiger der DDE der ersten Art ein Wert eines ersten LI-Felds der ersten PDE ist, in der der Endanzeiger der DDE der ersten Art eingekapselt ist.

6. Verfahren nach Anspruch 1,
wobei die erste PDE, die den Endanzeiger der DDE der ersten Art enthält, gesendet wird, bevor die zweite PDE, die ein erstes Segment der DDE der zweiten Art enthält, gesendet wird, oder alle PDE, die Segmente der DDE der zweiten Art enthalten, gesendet werden, bevor die erste PDE gesendet wird, die den Endanzeiger der DDE der ersten Art enthält.

7. Verfahren nach Anspruch 1, das außerdem aufweist:
Einkapseln von Füllbits in der ersten PDE, die den Endanzeiger der DDE der ersten Art enthält, oder Einkapseln eines Segments einer anderen DDE der ersten Art in der ersten PDE, die den Endanzeiger der DDE der ersten Art enthält.

8. Verfahren nach einem der Ansprüche 1 bis 7,
wobei zu den DDE-Informationen DDE zählen, die erneut gesendet werden müssen, und DDE, die nicht erneut gesendet werden müssen.

9. Verfahren nach Anspruch 1, 2, 5, 6 oder 7,
wobei der Endanzeiger der DDE einen der Folgenden umfasst: einen besonderen Wert des LI-Felds 0000000, einen besonderen Wert des LI-Felds 000000000000000 und einen besonderen Wert des LI-Felds 111111111111011.

## Revendications

1. Procédé de segmentation et de concaténation de données, **caractérisé en ce qu'**il comprend :
la décision (801), par un émetteur, du fait de savoir si le type des informations d'Unité de Données de Service, SDU (Service Data Unit), devant être encapsulées dans une première Unité de Données de Protocole, PDU (Protocol Data Unit), est identique au type des informations SDU déjà encapsulées dans la première PDU,
si le type des informations SDU devant être encapsulées dans la première PDU est identique au type des informations SDU déjà encapsulées dans la première PDU,
l'encapsulation (803), par l'émetteur, des informations SDU devant être encapsulées dans la première PDU pour la transmission ; et
si le type des informations SDU devant être encapsulées dans la première PDU n'est pas identique au type des informations SDU déjà encapsulées dans la première PDU, l'encapsulation (802), par l'émetteur, des informations SDU devant être encapsulées dans une seconde PDU pour la transmission ;
dans lequel le type des informations SDU comprend des informations critiques ou des informations non critiques parmi des informations de commande de MBMS ;
dans lequel les informations SDU devant être encapsulées dans la première PDU sont un segment d'une SDU d'un second type ; et les informations SDU déjà encapsulées dans la première PDU sont un indicateur de fin d'une SDU du premier type.

2. Procédé selon la revendication 1, dans lequel les informations SDU comprennent au moins l'un : d'un segment de SDU et d'un indicateur de fin de SDU.

3. Procédé selon la revendication 1, comprenant en outre, lorsque le type des informations SDU devant être encapsulées n'est pas identique au type des informations SDU déjà encapsulées :
l'émission de la première PDU contenant des informations SDU ; ou l'émission de la seconde PDU contenant des informations SDU, le type des informations SDU n'étant pas identique au type des informations SDU contenues dans la première PDU.

4. Procédé selon la revendication 1, comprenant en outre : l'encapsulation de bits de remplissage dans la première PDU.

5. Procédé selon la revendication 1, dans lequel l'indicateur de fin de la SDU du premier type est une valeur d'un premier champ LI de la première PDU dans laquelle est encapsulé l'indicateur de fin de la SDU du premier type.

6. Procédé selon la revendication 1, dans lequel la première PDU contenant l'indicateur de fin de la SDU du premier type est émise avant que la seconde PDU contenant un premier segment de la SDU du second type soit envoyée ; ou dans lequel toutes les PDU contenant des segments de la SDU du second type sont envoyées avant que la première PDU contenant l'indicateur de fin de la SDU du premier type soit envoyée.

7. Procédé selon la revendication 1, comprenant en outre : l'encapsulation de bits de remplissage dans la première PDU contenant l'indicateur de fin de la SDU du premier type ; ou l'encapsulation d'un segment d'une autre SDU du premier type dans la première PDU contenant l'indicateur de fin de la SDU du premier type.

8. Procédé selon l'une quelconque des revendications 1 à 7, dans lequel les informations SDU comprennent des SDU devant être retransmises et des SDU ne devant pas être retransmises.

9. Procédé selon la revendication 1, 2, 5, 6 ou 7, dans lequel l'indicateur de fin de SDU comprend l'une quelconque : d'une valeur spéciale du champ LI à 0000000, d'une valeur spéciale du champ LI à 000000000000000 et d'une valeur spéciale du champ LI à 111111111111011.
